# EUROPEAN PATENT SPECIFICATION

(11) **EP 3 336 399 B1**
(45) Date of publication and mention of the grant of the patent: **28.09.2022**
(21) Application number: 16834633.6
(22) Date of filing: 08.08.2016
(51) Int. Cl.: F16K 25/00, F16K 27/00, F25B 41/34, F25B 41/31

(54) **HOUSING ASSEMBLY OF VALVE AND VALVE**
GEHÄUSEANORDNUNG EINES VENTILS UND VENTIL
ENSEMBLE BOÎTIER DE SOUPAPE ET SOUPAPE

(30) Priority: 10.08.2015 CN 201510486372
(43) Date of publication of application: 20.06.2018
(73) Proprietor: Zhejiang Sanhua Intelligent Controls Co., Ltd., Shaoxing, Zhejiang 312500 (CN)
(72) Inventor: DING, Honghui, Shaoxing Zhejiang 312500 (CN); XU, Guohua, Shaoxing Zhejiang 312500 (CN); ZHOU, Shixiong, Shaoxing Zhejiang 312500 (CN)
(74) Representative: Barker Brettell LLP
(86) International application number: PCT/CN2016/093990
(87) International publication number: WO 2017/025009

(56) References cited:
- CN-A- 103 615 582
- CN-U- 202 691 389
- CN-U- 203 963 306
- CN-U- 203 963 346
- DE-A1- 3 427 526
- DE-A1-102008 040 108
- DE-A1-102010 030 947
- DE-A1-102010 030 947
- DE-A1-102010 041 989
- DE-A1-102013 202 776
- JP-A- 2006 258 245
- US-A1- 2015 129 067

## Description

### Technical Field

The present invention relates to a technical field of housing assemblies, and more particularly to a housing assembly of a valve and a valve.

### Background

At present, a housing of an electronic expansion valve consists of a valve base 1 and a rotor housing 2, forming a welded connection there between. The rotor housing 2 has a welding portion 2a butt-welded with the valve base 1, a weld joint is formed between the welding portion 2a and the valve base 1. In order to ensure normal working of a rotor of the electronic expansion valve, the rotor housing 2 is usually made of a thin-walled piece (wall thickness is in a range of 0.2mm to 0.8mm). In a general application situation, welding strength between the rotor housing 2 of a thin-walled structure and the valve base 1 can be ensured. However, in a supercritical high-pressure system such as CO₂, the rotor housing 2 of the thin-walled structure is likely to deform under a high-pressure impact, so that fatigue damage is likely to occur at a weld joint between the rotor housing 2 and the valve base 1.

DE102008040108A1 discloses a valve, in particular an injection or metering valves for fuel injection or exhaust systems of internal combustion engines, the valve includes a valve housing 11, a connecting cover 17, and a valve seat carrier 16, the valve housing 11 is made of a fiber composite material, the connecting cover 17 is engaged with the valve housing 11 through the annular shoulder, and the connecting cover 17 is fixedly connected with the valve housing 11.

DE102013202776A1 discloses a valve for metering a fluid, and specifically discloses that a plastic flange 38 disposed at a joint of the sleeve 36 and the magnet member 27 by means of a package.

US2015/129067 discloses an electronic expansion valve, a sleeve is fixed in a main valve cavity of the electronic expansion valve, and a valve core seat is axially movably provided in the sleeve, a circumferential side wall of the sleeve is provided with a sleeve flow passage, and a circumferential side wall of the valve core seat is provided with a valve core seat side hole;

A valve for flowing medium is disclosed in DE102010030947A1, which comprises a valve base and a housing fixedly provided on the valve base wherein the housing assembly further comprises: a sleeve, at least one portion of the sleeve is provided on an outer side of the housing in a sleeving manner; and a reinforcement portion, provided on an outer side wall of the sleeve, the reinforcement portion comprising a first reinforcement portion, the first reinforcement portion is protruded out of the sleeve along a radial direction of the housing; the sleeve is provided on an outer side of the valve base and the housing in a sleeving manner, and the sleeve is welded to the housing.

### Summary

The present invention is mainly directed to a housing assembly of a valve and a valve, intended to solve the problem in the prior art in which fatigue damage is likely to occur at a weld joint of a housing assembly.

The invention is defined by the appended claims.

To this end, according to an aspect of the present invention, a housing assembly of a valve is provided. The housing assembly of a valve comprises a valve base and a housing fixedly provided on the valve base. The valve base has a first fitting end face facing the housing, and the housing has a second fitting end face matched with the first fitting end face of the valve base. The housing assembly further comprises: a sleeve, at least a portion of the sleeve is provided on an outer side of the housing in a sleeving manner; and a reinforcement portion, provided on an outer side wall of the sleeve, the reinforcement portion comprises a first reinforcement portion, the first reinforcement portion is located above the first fitting end face.

According to the invention, the sleeve is provided on an outer side of the valve base and the housing in a sleeving manner, and the sleeve shelters from the first fitting end face and the second fitting end face.

According to the invention, the sleeve and the housing are in interference fit.

Further, the reinforcement portion is of a sealed circular structure.

Further, the sleeve has a first sleeve segment matched with the valve base and a second sleeve segment matched with the housing, an inner diameter of the first sleeve segment is equal to an inner diameter of the second sleeve segment.

According to the invention, the first reinforcement portion is protruded out of the sleeve along a radial direction of the housing, and a weld joint is formed among the first fitting end face, the second fitting end face and the sleeve.

According to a second aspect of the invention, the reinforcement portion further comprises a second reinforcement portion, the second reinforcement portion is located below the second fitting end face, a first weld joint is formed between the first sleeve segment and the valve base, a second weld joint is formed between the second sleeve segment and the housing, and the first reinforcement portion and the second reinforcement portion are provided between the first weld joint and the second weld joint.

Further, the first reinforcement portion and the second reinforcement portion are connected together and form a whole structure, and the first reinforcement portion and the second reinforcement portion shelter from the first fitting end face and the second fitting end face.

Further, the sleeve has a first sleeve segment matched with the valve base and a second sleeve segment matched with the housing, an inner diameter of the first sleeve segment is greater than an inner diameter of the second sleeve segment, a stepped face is formed between an inner side wall of the first sleeve segment and an inner side wall of the second sleeve segment, the stepped face is matched with the first fitting end face, and a weld joint is formed among the first fitting end face, the second fitting end face and the stepped face.

Further, the valve base has a cylindrical structure extending toward the housing and provided on the outer side of the housing, the cylindrical structure forming the sleeve.

According to another aspect of the present disclosure, a valve is provided. The valve comprises a housing assembly, the housing assembly is the above-mentioned housing assembly.

By applying the technical solution of the present invention, a sleeve at least sleeves a housing, and a first reinforcement portion is provided on an outer side wall of the sleeve, the first reinforcement portion is located above a first fitted end face. The first reinforcement portion can exert a pressure resistance reinforcement action on the housing, i.e., can effectively protect the housing under a high-pressure impact, and can reduce the deformation of a welding part of the housing, thereby preventing fatigue damage at a weld joint, and increasing the reliability of the weld joint.

### Brief Description of the Drawings

The drawings of the description, forming a part of the present application, are used to provide a further understanding for the present disclosure. The schematic embodiments and illustrations of the present disclosure are used to explain the present disclosure, and do not form improper limits to the present disclosure. In the drawings:
Fig. 1 shows a structure diagram of an electronic expansion valve in the prior art;
Fig. 2 shows a structure diagram of a housing assembly of an electronic expansion valve in Fig. 1;
Fig. 3 shows a structure diagram of a housing assembly of a valve according to an embodiment 1 of the present invention;
Fig. 4 shows a local enlarged view of a housing assembly in Fig. 3;
Fig. 5 shows a structure diagram of a sleeve of a housing assembly in Fig. 3;
Fig. 6 shows a structure diagram of a housing assembly of a valve according to an embodiment 2 of the present invention;
Fig. 7 shows a local enlarged view of a housing assembly in Fig. 6;
Fig. 8 shows a structure diagram of a sleeve of a housing assembly in Fig. 6;
Fig. 9 shows a structure diagram of a housing assembly of a valve according to an embodiment 3 of the present invention;
Fig. 10 shows a local enlarged view of a housing assembly in Fig. 9;
Fig. 11 shows a structure diagram of a sleeve of a housing assembly in Fig. 9;
Fig. 12 shows a structure diagram of a housing assembly of a valve according to an embodiment 4 of the present disclosure;
Fig. 13 shows a local enlarged view of a housing assembly in Fig. 12;
Fig. 14 shows a structure diagram of a valve base and a sleeve of a housing assembly in Fig. 12; and
Fig. 15 shows a structure diagram of a valve according to an embodiment of the present invention.

Herein, the drawings include the following drawing marks:
1, valve base; 2, rotor housing; 2a, welding portion; 10, valve base; 20, housing; 30, sleeve; 40, reinforcement portion; 41, first reinforcement portion; and 42, second reinforcement portion.

### Detailed Description of the Embodiments

It is important to note that embodiments in the present application and characteristics in the embodiments may be combined mutually under the condition of no conflicts. The present disclosure will be illustrated herein below with reference to the drawings and in conjunction with the embodiments in detail.

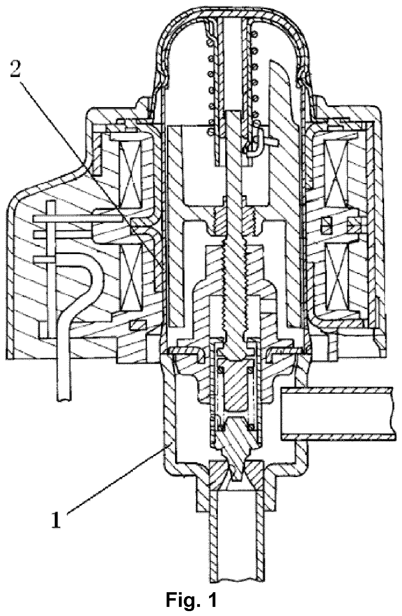

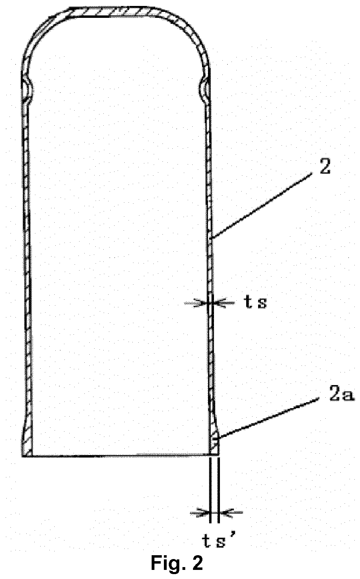

In the prior art, a special housing structure exists, and a phenomenon that fatigue damage is likely to occur at a weld joint can be alleviated to a certain extent. Specifically, as shown in Fig. 1 and Fig. 2, a wall thickness of a welding portion 2a butt-welded with a valve base 1 of a rotor housing 2 is ts', and a wall thickness of a coil mounting portion of the rotor housing 2 is ts, wherein ts' is greater than ts. The rotor housing 2 is a stamped workpiece formed by stamping a material of which a thickness is equal to the wall thickness of the welding portion 2a. The increase of the wall thickness of the welding portion 2a can ensure the melting range width and melting depth of a base material of a welding end face (a weld joint is formed between a lower end face of the welding portion 2a of the rotor housing 2 and an upper end face of the valve base 1), thereby ensuring welding strength to a certain extent. However, the housing structure still results in the phenomenon that fatigue damage is likely to occur at a weld joint under a long-time fatigue impact of a high-pressure environment.

In addition, the existing housing structure also has problems as follows.
1. The rotor housing 2 is formed by stamping a material of which the thickness is equal to the wall thickness of the welding portion 2a, the wall thickness of the welding portion 2a is inconsistent with the wall thickness of the coil mounting portion at an upper part of the rotor housing 2, the stretching process is relative complex, and a mold is highly required.
2. Stress is concentrated at a connection transition part between a wall of the welding portion 2a and the coil mounting portion of the rotor housing 2, thereby making it likely to cause breakage under a fatigue impact of a high-pressure environment.

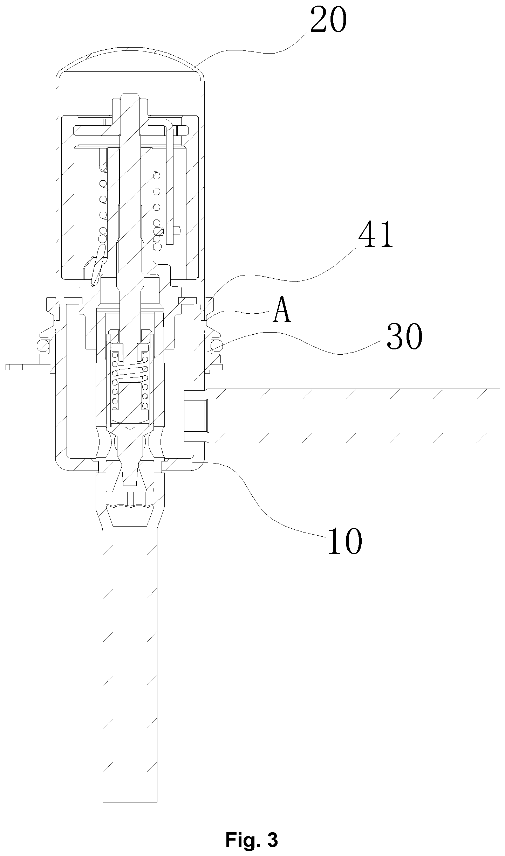

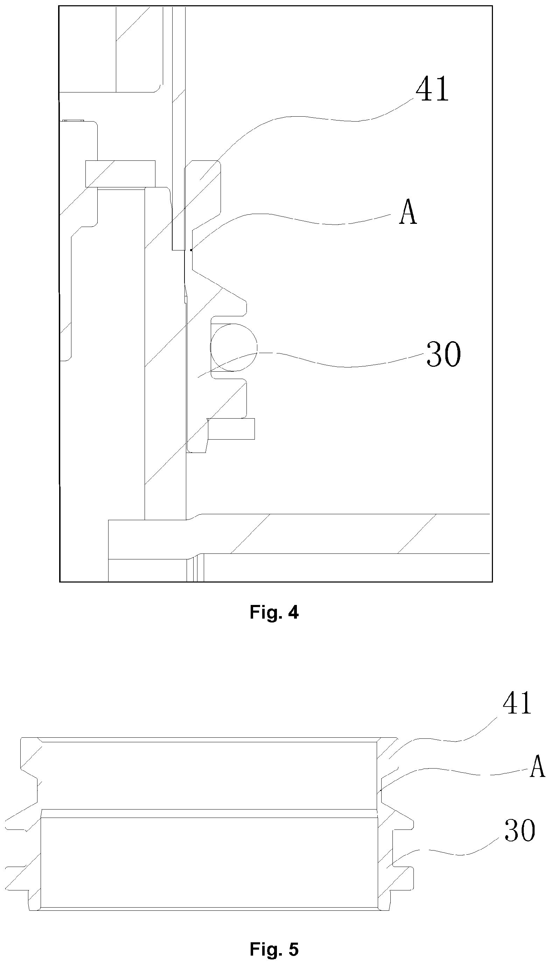

As shown in Fig. 3 to Fig. 5, a housing assembly of a valve according to an embodiment 1 is a housing assembly of an electronic expansion valve. The housing assembly comprises a valve base 10 and a housing 20 fixedly provided on the valve base 10. The housing 20 is a rotor housing. The valve base 10 has a first fitting end face facing the housing 20. The housing 20 has a second fitting end face matched with the first fitting end face of the valve base 10. The housing assembly of the present embodiment further comprises a sleeve 30 and a first reinforcement portion 41, wherein the sleeve 30 is provided on an outer side of the valve base 10 and the housing 20. The sleeve 30 shelters from the first fitting end face and the second fitting end face. The first reinforcement portion 41 is provided on an outer side wall of the sleeve 30, and the first reinforcement portion 41 is located above the first fitting end face.

By application of the housing assembly in the present embodiment, the sleeve 30 sleeves the valve base 10 and the housing 20, and the sleeve 30 shelters from the first fitting end face and the second fitting end face. Meanwhile, a first reinforcement portion 41 is provided on the outer side wall of the sleeve 30. The first reinforcement portion 41 is located above the first fitted end face. When the housing assembly is welded, a laser welding is performed at a position A, corresponding to the first fitted end face and the second fitted end face, of the sleeve 30. Thus, a melting range width and a melting depth of a base material of a welding face (the first fitted end face, the second fitted end face and an inner side face of the sleeve 30) can be ensured by utilizing an own wall thickness of the sleeve 30, so that welding strength can be ensured even if the wall thickness of a welding portion of the housing 20 is not increased, thereby avoiding a complex machining process of the housing 20 and a phenomenon of easy breakage. In addition, the first reinforcement portion 41 is provided on the outer side wall of the sleeve 30 and located above the first fitted end face, so that a pressure resistance reinforcement action can be exerted on the housing 20, i.e., the housing 20 can be effectively protected under a high-pressure impact, and a deformation of a welding part of the housing 20 can be reduced, thereby preventing fatigue damage at a weld joint, and increasing a reliability of the weld joint.

It is important to note that in the present embodiment, the sleeve 30 sleeves the valve base 10 and the housing 20, the sleeve 30 shelters from the first fitting end face and the second fitting end face, and the laser welding is performed at a position A, corresponding to the first fitted end face and the second fitted end face, of the sleeve 30. Certainly, the disposing position of the sleeve 30 is not limited to this. In other implementation manners not shown in the figures, the sleeve 30 may also be only provided on the housing 20, and the housing 20 and the valve base 10 can be directly welded (i.e., welding faces are the first fitting end face and the second fitting end face), so that the housing 20 and the valve base 10 can be connected, the sleeve 30 can effectively protect the housing 20, and the deformation of a welding part of the housing 20 is reduced, thereby preventing fatigue damage at a weld joint, and increasing the reliability of the weld joint.

As shown in Fig. 3 to Fig. 5, in the housing assembly of the present embodiment, the sleeve 30 and the housing 20 are in an interference fit. The first reinforcement portion 41 is of a sealed circular structure. The sleeve 30 and the housing 20 are set to be in interference fit, so that the sleeve 30 can tightly clamp the housing 20. Thus, the housing 20 can be further protected to prevent a welding part of the housing 20 from deforming under a high-pressure impact, thereby protecting a weld joint. Since the first reinforcement portion 41 is provided at a position corresponding to the housing 20, the interference fit between the sleeve 30 and the housing 20 can make the first reinforcement portion 41 and the housing 20 fitted more tightly, thereby preventing fatigue damage at a weld joint.

As shown in Fig. 3 to Fig. 5, in the housing assembly of the present embodiment, the sleeve 30 has a first sleeve segment matched with the valve base 10 and a second sleeve segment matched with the housing 20. An inner diameter of the first sleeve segment is equal to an inner diameter of the second sleeve segment. The first reinforcement portion 41 is protruded out of the sleeve 30 along a radial direction of the housing 20, and a weld joint is formed among the first fitting end face, the second fitting end face and the position A of the sleeve 30.

When the housing assembly is welded, the sleeve 30 is pressed against the valve base 10 and the housing 20, so that the sleeve 30 is in interference fit with the valve base 10 and the sleeve 30 is in interference fit with the housing 20. In this process, the position A of the sleeve 30 below the first reinforcement portion 41 is aligned with the first fitting end face and the second fitting end face, which are overlapped. Thereafter, laser welding is performed at the position A of the sleeve 30. Thus, the melting range width and melting depth of a base material of a welding face (the first fitted end face, the second fitted end face and an inner side face of the position A of the sleeve 30) can be ensured by utilizing the wall thickness of the position A of the sleeve 30. The protruded first reinforcement portion 41 is unlikely to deform due to a large thickness along the radial direction of the sleeve 30. Under a high-pressure impact, the protruded first reinforcement portion 41 can more effectively protect the housing 20, and the deformation of a welding part of the housing 20 is reduced, thereby preventing fatigue damage at a weld joint.

It is important to note that during laser welding, it is necessary to select a laser source for laser welding according to a specific weld joint requirement, and the wall thickness of the sleeve 30 located at a welding position should be matched with a laser source (laser energy) for laser welding. If the wall thickness of the sleeve 30 located at the welding position is too large for the laser source, the welding effect will be influenced, and the first fitting end face and the second fitting end face cannot be even effectively welded together.

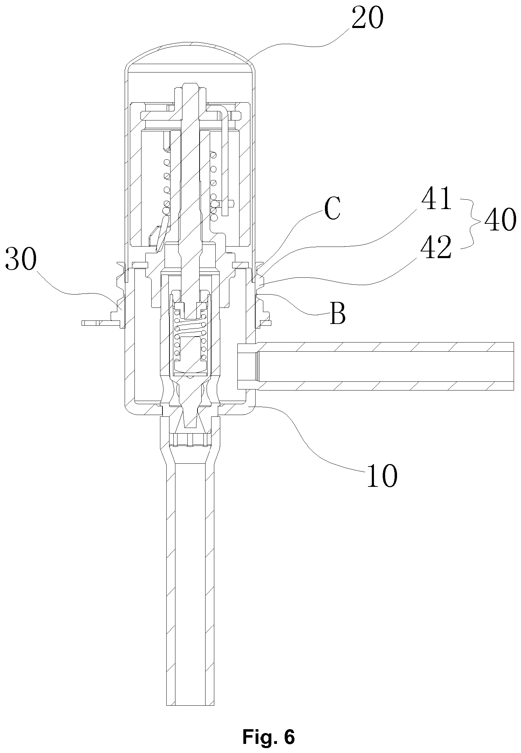

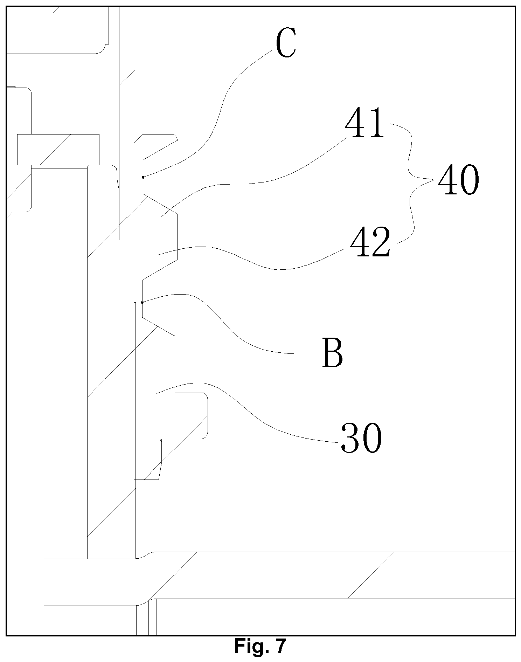

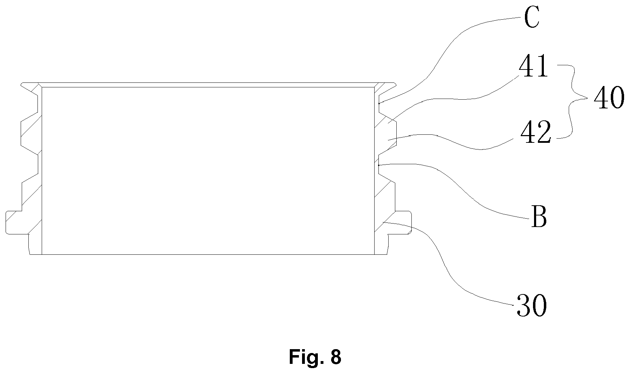

As shown in Fig. 6 to Fig. 8, main differences between the housing assembly of a valve in the embodiment 2 and the housing assembly of a valve in the embodiment 1 are that: the housing assembly further comprises a sleeve 30 and a reinforcement portion 40 provided on an outer side wall of the sleeve 30, wherein the sleeve 30 sleeves the valve base 10 and the housing 20. The sleeve 30 keeps out a first fitting end face and a second fitting end face. The reinforcement portion 40 comprises a first reinforcement portion 41 provided above the first fitting end face and a second reinforcement portion 42 provided below the second fitting end face. A first weld joint is formed between a first sleeve segment and a position B of the valve base 10, and a second weld joint is formed between a second sleeve segment and a position C of the housing 20. The first reinforcement portion 41 and the second reinforcement portion 42 are provided between the first weld joint and the second weld joint (i.e., provided between the position B and the position C).

When the housing assembly is welded, the sleeve 30 is pressed against the valve base 10 and the housing 20, so that the sleeve 30 is in interference fit with the valve base 10 and the housing 20. In this process, the position B of the first sleeve segment above the first reinforcement portion 41 corresponds to the housing 20, and the position C of the second sleeve segment below the second reinforcement portion 42 corresponds to the valve base 10. Meanwhile, the first reinforcement portion 41 and the second reinforcement portion 42 are close to the first fitting end face and the second fitting end face, which are overlapped. Thereafter, laser welding is performed at the position B and position C of the sleeve 30. Thus, the melting range width and melting depth of a base material of a welding face (an inner side face at the position B of the first sleeve segment, an outer side face of the housing 20, an inner side face at the position C of the second sleeve segment, and an outer side face of the valve base 10) can be ensured by utilizing the wall thickness of the position B of the first sleeve segment and the position C of the second sleeve segment. Under a high-pressure impact, the first reinforcement portion 41 and the second reinforcement portion 42 can reinforce the first fitting end face and the second fitting end face, the housing 20 and the valve base 10 can be more effectively protected, and the deformation of a welding part of the housing 20 and a welding part of the valve base 10 is reduced, thereby preventing fatigue damage at a weld joint.

As shown in Fig. 6 to Fig. 8, in the housing assembly of the present embodiment, the first reinforcement portion 41 and the second reinforcement portion 42 are connected together and form a whole structure. The first reinforcement portion 41 and the second reinforcement portion 42 shelter from the first fitting end face and the second fitting end face. The structure can enhance the reinforcement effects of the first reinforcement portion 41 and the second reinforcement portion 42, the structure is simple, and workability is achieved.

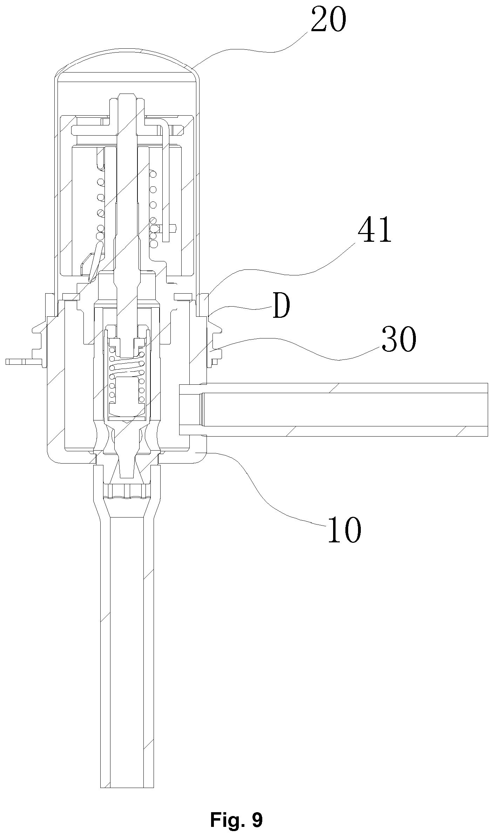

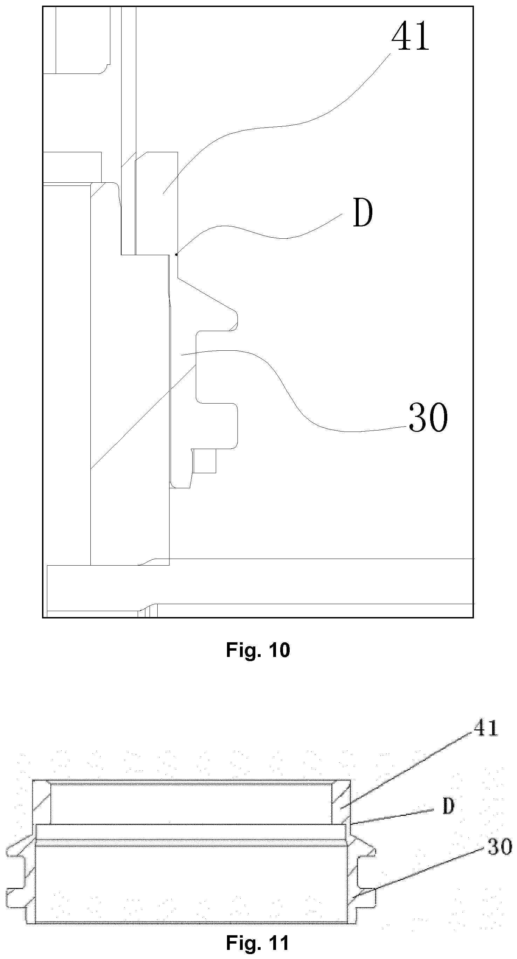

As shown in Fig. 9 to Fig. 11, main differences between the housing assembly of a valve in the embodiment 3 and the housing assembly of a valve in the embodiment 1 are that: the sleeve 30 has a first sleeve segment matched with the valve base 10 and a second sleeve segment matched with the housing 20. An inner diameter of the first sleeve segment is greater than an inner diameter of the second sleeve segment. A stepped face is formed between an inner side wall of the first sleeve segment and an inner side wall of the second sleeve segment. The stepped face is aligned with the first fitting end face. A weld joint is formed among the first fitting end face, the second fitting end face and the stepped face.

When the housing assembly is welded, the sleeve 30 is pressed against the valve base 10 and the housing 20, so that the sleeve 30 is in interference fit with the valve base 10 and the housing 20. In this process, a position D of the sleeve 30 below the first reinforcement portion 41 can be directly aligned with the first fitting end face and the second fitting end face, which are overlapped, via the stepped face of the sleeve 30 without manual alignment or tool-based alignment. Thereafter, laser welding is performed at the position D of the sleeve 30. Thus, the melting range width and melting depth of a base material of a welding face (the first fitted end face, the second fitted end face and the stepped face of the sleeve 30) can be ensured by utilizing the wall thickness of the position D of the sleeve 30. Under a high-pressure impact, the first reinforcement portion 41 can more effectively protect the housing 20, and the deformation of a welding part of the housing 20 is reduced, thereby preventing fatigue damage at a weld joint.

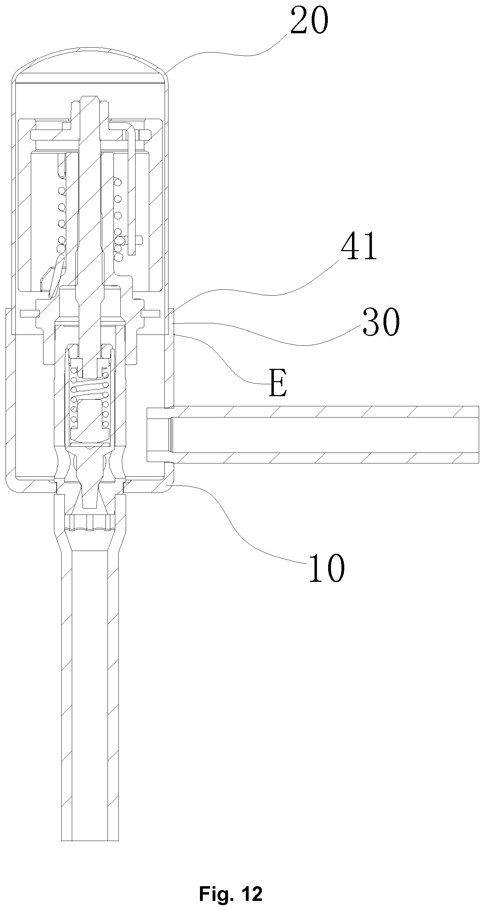

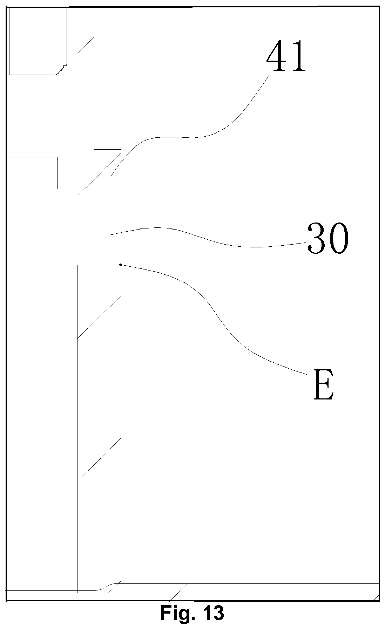

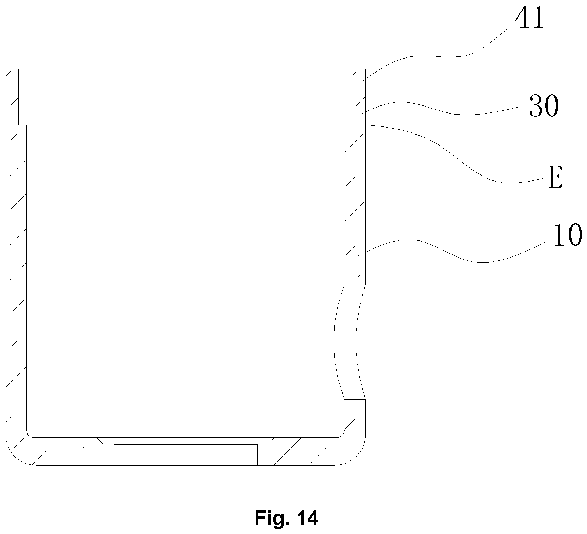

As shown in Fig. 12 to Fig. 14, main differences between the housing assembly of a valve in the embodiment 4 and the housing assembly of a valve in the embodiment 1 are that: the valve base 10 has a cylindrical structure extending toward the housing 20 and provided on the outer side of the housing 20, the cylindrical structure forming the sleeve 30. Thus, the structure of the housing assembly can be simplified, it is unnecessary to independently set a sleeve structure, and workability is achieved.

When the housing assembly is welded, the housing 20 is pressed against the valve base 10. In this process, a position, corresponding to a welding end face of the housing 20, on the outer side of the cylindrical structure (i.e., sleeve 30) of the valve base 10 is a position E. Thereafter, laser welding is performed at the position E of the cylindrical structure. Thus, the melting range width and melting depth of a base material of a welding face (the first fitted end face, the second fitted end face and an inner side face of the position E of the cylindrical structure) can be ensured by utilizing the wall thickness of the position E of the cylindrical structure of the valve base 10. Under a high-pressure impact, the first reinforcement portion 41 at the upper part of the cylindrical structure can more effectively protect the housing 20, and the deformation of a welding part of the housing 20 is reduced, thereby preventing fatigue damage at a weld joint.

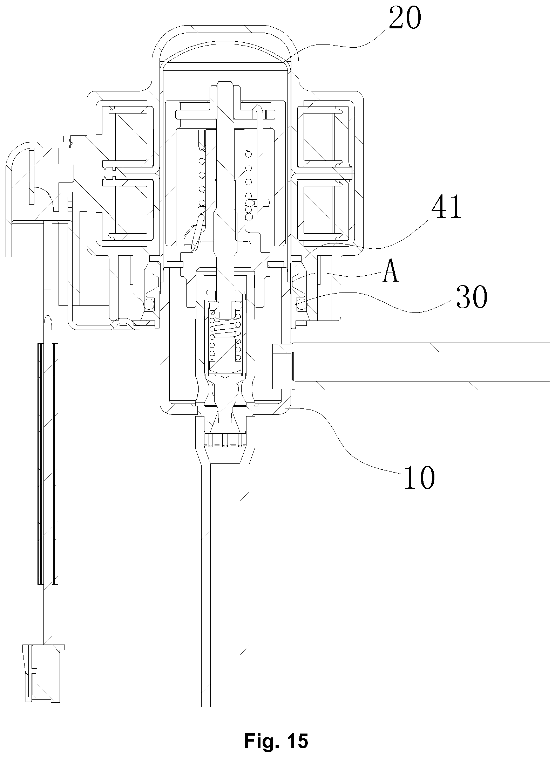

As shown in Fig. 15, the present application also provides a valve, comprising a housing assembly. The housing assembly is the housing assembly in the embodiment 1. The welding strength of the valve can be ensured, fatigue damage is unlikely to occur, and the service life is long. It is important to note that the valve is not limited to adopt the housing assembly in the embodiment 1. In other implementation manners not shown in the figures, the valve may also adopt the housing assembly in the embodiment 2 to the embodiment 4.

From the above description, it can be seen that the embodiments of the present invention achieve the technical effects as follows.

The housing assembly in the present application can ensure welding strength even if the wall thickness of a welding portion of a housing is not increased, thereby avoiding a complex machining process of the housing and a phenomenon of easy breakage. In addition, a first reinforcement portion is provided on an outer side wall of a sleeve and located above a first fitted end face, so that a pressure resistance reinforcement action can be exerted on the housing. That is, the housing can be effectively protected under a high-pressure impact, and the deformation of a welding part of the housing can be reduced, thereby preventing fatigue damage at a weld joint, and increasing the reliability of the weld joint.

The above is only the preferable embodiments of the present disclosure, and not intended to limit the present disclosure. As will occur to a person skilled in the art, the present disclosure is susceptible to various modifications and changes within the scope of the attached claims.

## Claims

1. A housing assembly of a valve, comprising:
a valve base (10) and a housing (20) fixedly provided on the valve base (10), the valve base (10) has a first fitting end face facing the housing (20), and the housing (20) has a second fitting end face matched with the first fitting end face of the valve base (10),
wherein the housing assembly further comprises:
a sleeve (30), at least one portion of the sleeve (30) is provided on an outer side of the housing (20) in a sleeving manner; and
a reinforcement portion (40), provided on an outer side wall of the sleeve (30), the reinforcement portion (40) comprising a first reinforcement portion (41), the first reinforcement portion (41) is located above the first fitting end face, the first reinforcement portion (41) is protruded out of the sleeve (30) along a radial direction of the housing (20); the sleeve (30) is provided on an outer side of the valve base (10) and the housing (20) in a sleeving manner, and the sleeve (30) shelters from the first fitting end face and the second fitting end face, the sleeve (30) and the housing (20) are in interference fit, and the sleeve (30) is welded to the housing (20), a weld joint is formed among the first fitting end face, the second fitting end face and the sleeve (30).

2. The housing assembly as claimed in claim 1, wherein the reinforcement portion (40) is of a sealed circular structure.

3. The housing assembly as claimed in claim 1, wherein the sleeve (30) has a first sleeve segment matched with the valve base (10) and a second sleeve segment matched with the housing (20), an inner diameter of the first sleeve segment is equal to an inner diameter of the second sleeve segment.

4. The housing assembly as claimed in claim 1, wherein the sleeve (30) has a first sleeve segment matched with the valve base (10) and a second sleeve segment matched with the housing (20), an inner diameter of the first sleeve segment is greater than an inner diameter of the second sleeve segment, a stepped face is formed between an inner side wall of the first sleeve segment and an inner side wall of the second sleeve segment, the stepped face is matched with the first fitting end face, and a weld joint is formed among the first fitting end face, the second fitting end face and the stepped face.

5. A housing assembly of a valve, comprising:
a valve base (10) and a housing (20) fixedly provided on the valve base (10), the valve base (10) has a first fitting end face facing the housing (20), and the housing (20) has a second fitting end face matched with the first fitting end face of the valve base (10),
wherein the housing assembly further comprises:
a sleeve (30), at least one portion of the sleeve (30) is provided on an outer side of the housing (20) in a sleeving manner; and
a reinforcement portion (40), provided on an outer side wall of the sleeve (30), the reinforcement portion (40) comprising a first reinforcement portion (41) and a second reinforcement portion (42), the first reinforcement portion (41) is located above the first fitting end face, the second reinforcement portion (42) is located below the second fitting end face, the first reinforcement portion (41) is protruded out of the sleeve (30) along a radial direction of the housing (20); the sleeve (30) is provided on an outer side of the valve base (10) and the housing (20) in a sleeving manner, and the sleeve (30) shelters from the first fitting end face and the second fitting end face, the sleeve (30) and the housing (20) are in interference fit, and the sleeve (30) is welded to the housing (20);
the sleeve (30) has a first sleeve segment matched with the valve base (10) and a second sleeve segment matched with the housing (20),
a first weld joint is formed between the first sleeve segment and the valve base (10), a second weld joint is formed between the second sleeve segment and the housing (20), and the first reinforcement portion (41) and the second reinforcement portion (42) are provided between the first weld joint and the second weld joint.

6. The housing assembly as claimed in claim 5, wherein the first reinforcement portion (41) and the second reinforcement portion (42) are connected together and form a whole structure, and the first reinforcement portion (41) and the second reinforcement portion (42) shelter from the first fitting end face and the second fitting end face.

7. A valve, comprising a housing assembly, wherein the housing assembly is the housing assembly as claimed in any one of claims 1 to 6.

## Patentansprüche

1. Gehäuseanordnung eines Ventils, umfassend:
einen Ventilfuß (10) und ein Gehäuse (20), das fest auf dem Ventilfuß (10) vorgesehen ist, wobei der Ventilfuß (10) eine erste Montageendfläche aufweist, die dem Gehäuse (20) zugewandt ist, und das Gehäuse (20) eine zweite Montageendfläche aufweist, die mit der ersten Montageendfläche des Ventilfußes (10) zusammenpasst,
wobei die Gehäuseanordnung ferner umfasst:
eine Hülse (30), wobei mindestens ein Abschnitt der Hülse (30) an einer Außenseite des Gehäuses (20) in einer hülsenartigen Weise vorgesehen ist; und
einen Verstärkungsabschnitt (40), der an einer äußeren Seitenwand der Hülse (30) vorgesehen ist, wobei der Verstärkungsabschnitt (40) einen ersten Verstärkungsabschnitt (41) umfasst, wobei sich der erste Verstärkungsabschnitt (41) oberhalb der ersten Montageendfläche befindet, wobei der erste Verstärkungsabschnitt (41) aus der Hülse (30) entlang einer radialen Richtung des Gehäuses (20) herausragt; wobei die Hülse (30) an einer Außenseite des Ventilfußes (10) und des Gehäuses (20) in einer hülsenartigen Weise vorgesehen ist und die Hülse (30) von der ersten Montageendfläche und der zweiten Montageendfläche abschirmt, die Hülse (30) und das Gehäuse (20) in Presspassung sind und die Hülse (30) an das Gehäuse (20) geschweißt ist, wobei eine Schweißverbindung zwischen der ersten Montageendfläche, der zweiten Montageendfläche und der Hülse (30) gebildet ist.

2. Gehäuseanordnung nach Anspruch 1, wobei der Verstärkungsabschnitt (40) eine abgedichtete kreisförmige Struktur aufweist.

3. Gehäuseanordnung nach Anspruch 1, wobei die Hülse (30) ein erstes Hülsensegment, das mit dem Ventilfuß (10) zusammenpasst, und ein zweites Hülsensegment, das mit dem Gehäuse (20) zusammenpasst, aufweist, wobei ein Innendurchmesser des ersten Hülsensegments gleich einem Innendurchmesser des zweiten Hülsensegments ist.

4. Gehäuseanordnung nach Anspruch 1, wobei die Hülse (30) ein erstes Hülsensegment, das mit dem Ventilfuß (10) zusammenpasst, und ein zweites Hülsensegment, das mit dem Gehäuse (20) zusammenpasst, aufweist, wobei ein Innendurchmesser des ersten Hülsensegments größer ist als ein Innendurchmesser des zweiten Hülsensegments, eine abgestufte Fläche zwischen einer inneren Seitenwand des ersten Hülsensegments und einer inneren Seitenwand des zweiten Hülsensegments ausgebildet ist, die abgestufte Fläche mit der ersten Montageendfläche zusammenpasst und eine Schweißverbindung zwischen der ersten Montageendfläche, der zweiten Montageendfläche und der abgestuften Fläche ausgebildet ist.

5. Gehäuseanordnung eines Ventils, umfassend:
einen Ventilfuß (10) und ein Gehäuse (20), das fest auf dem Ventilfuß (10) vorgesehen ist, wobei der Ventilfuß (10) eine erste Montageendfläche aufweist, die dem Gehäuse (20) zugewandt ist, und das Gehäuse (20) eine zweite Montageendfläche aufweist, die mit der ersten Montageendfläche des Ventilfußes (10) zusammenpasst,
wobei die Gehäuseanordnung ferner umfasst:
eine Hülse (30), wobei mindestens ein Abschnitt der Hülse (30) an einer Außenseite des Gehäuses (20) in einer hülsenartigen Weise vorgesehen ist; und
einen Verstärkungsabschnitt (40), der an einer äußeren Seitenwand der Hülse (30) vorgesehen ist, wobei der Verstärkungsabschnitt (40) einen ersten Verstärkungsabschnitt (41) und einen zweiten Verstärkungsabschnitt (42) umfasst, wobei sich der erste Verstärkungsabschnitt (41) oberhalb der ersten Montageendfläche befindet, wobei sich der zweite Verstärkungsabschnitt (42) unterhalb der zweiten Montageendfläche befindet, wobei der erste Verstärkungsabschnitt (41) aus der Hülse (30) entlang einer radialen Richtung des Gehäuses (20) herausragt; wobei die Hülse (30) an einer Außenseite des Ventilfußes (10) und des Gehäuses (20) in einer hülsenartigen Weise vorgesehen ist und die Hülse (30) von der ersten Montageendfläche und der zweiten Montageendfläche abschirmt, wobei die Hülse (30) und das Gehäuse (20) in Presspassung sind und die Hülse (30) an das Gehäuse (20) geschweißt ist;
wobei die Hülse (30) ein erstes Hülsensegment, das mit dem Ventilfuß (10) zusammenpasst, und ein zweites Hülsensegment, das mit dem Gehäuse (20) zusammenpasst, aufweist,
wobei eine erste Schweißverbindung zwischen dem ersten Hülsensegment und dem Ventilfuß (10) ausgebildet ist, eine zweite Schweißverbindung zwischen dem zweiten Hülsensegment und dem Gehäuse (20) ausgebildet ist, und der erste Verstärkungsabschnitt (41) und der zweite Verstärkungsabschnitt (42) zwischen der ersten Schweißverbindung und der zweiten Schweißverbindung vorgesehen sind.

6. Gehäuseanordnung nach Anspruch 5, wobei der erste Verstärkungsabschnitt (41) und der zweite Verstärkungsabschnitt (42) miteinander verbunden sind und eine Gesamtstruktur bilden, und der erste Verstärkungsabschnitt (41) und der zweite Verstärkungsabschnitt (42) von der ersten Montageendfläche und der zweiten Montageendfläche abschirmen.

7. Ventil, das eine Gehäuseanordnung umfasst, wobei die Gehäuseanordnung die Gehäuseanordnung nach einem der Ansprüche 1 bis 6 ist.

## Revendications

1. Ensemble de boîtier d'une soupape, comprenant :
une base de soupape (10) et un boîtier (20) prévus de manière fixe sur la base de soupape (10), la base de soupape (10) a une première face d'extrémité de montage faisant face au boîtier (20), et le boîtier (20) a une seconde face d'extrémité de montage adaptée à la première face d'extrémité de montage de la base de soupape (10),
dans lequel l'ensemble de boîtier comprend en outre :
un manchon (30), au moins une partie du manchon (30) est prévue sur un côté extérieur du boîtier (20) d'une manière gainée ; et
une partie de renfort (40), prévue sur une paroi latérale extérieure du manchon (30), la partie de renfort (40) comprenant une première partie de renfort (41), la première partie de renfort (41) est située au-dessus de la première face d'extrémité de montage, la première partie de renfort (41) fait saillie hors du manchon (30) le long d'une direction radiale du boîtier (20) ; le manchon (30) est prévu sur un côté extérieur de la base de soupape (10) et du boîtier (20) d'une manière gainée, et le manchon (30) protège de la première face d'extrémité de montage et de la seconde face d'extrémité de montage, le manchon (30) et le boîtier (20) sont en ajustement serré, et le manchon (30) est soudé au boîtier (20), un joint de soudure est formé entre la première face d'extrémité de montage, la seconde face d'extrémité de montage et le manchon (30).

2. Ensemble de boîtier selon la revendication 1, dans lequel la partie de renfort (40) est celle d'une structure circulaire étanche.

3. Ensemble de boîtier selon la revendication 1, dans lequel le manchon (30) a un premier segment de manchon adapté à la base de soupape (10) et un second segment de manchon adapté au boîtier (20), un diamètre intérieur du premier segment de manchon est égal à un diamètre intérieur du second segment de manchon.

4. Ensemble de boîtier selon la revendication 1, dans lequel le manchon (30) a un premier segment de manchon adapté à la base de soupape (10) et un second segment de manchon adapté au boîtier (20), un diamètre intérieur du premier segment de manchon est supérieur à un diamètre intérieur du second segment de manchon, une face étagée est formée entre une paroi latérale intérieure du premier segment de manchon et une paroi latérale intérieure du second segment de manchon, la face étagée est adaptée à la première face d'extrémité de montage, et un joint de soudure est formé entre la première face d'extrémité de montage, la seconde face d'extrémité de montage et la face étagée.

5. Ensemble de boîtier d'une soupape, comprenant :
une base de soupape (10) et un boîtier (20) prévus de manière fixe sur la base de soupape (10), la base de soupape (10) a une première face d'extrémité de montage faisant face au boîtier (20), et le boîtier (20) a une seconde face d'extrémité de montage adaptée à la première face d'extrémité de montage de la base de soupape (10),
dans lequel l'ensemble de boîtier comprend en outre :
un manchon (30), au moins une partie du manchon (30) est prévue sur un côté extérieur du boîtier (20) d'une manière gainée ; et
une partie de renfort (40), prévue sur une paroi latérale extérieure du manchon (30), la partie de renfort (40) comprenant une première partie de renfort (41) et une seconde partie de renfort (42), la première partie de renfort (41) est située au-dessus de la première face d'extrémité de montage, la seconde partie de renfort (42) est située en dessous de la seconde face d'extrémité de montage, la première partie de renfort (41) fait saillie hors du manchon (30) le long d'une direction radiale du boîtier (20) ; le manchon (30) est prévu sur un côté extérieur de la base de soupape (10) et du boîtier (20) d'une manière gainée, et le manchon (30) protège de la première face d'extrémité de montage et de la seconde face d'extrémité de montage, le manchon (30) et le boîtier (20) sont en ajustement serré, et le manchon (30) est soudé au boîtier (20) ;
le manchon (30) a un premier segment de manchon adapté à la base de soupape (10) et un second segment de manchon adapté au boîtier (20),
un premier joint de soudure est formé entre le premier segment de manchon et la base de soupape (10), un second joint de soudure est formé entre le second segment de manchon et le boîtier (20), et la première partie de renfort (41) et la seconde partie de renfort (42) sont prévues entre le premier joint de soudure et le second joint de soudure.

6. Ensemble de boîtier selon la revendication 5, dans lequel la première partie de renfort (41) et la seconde partie de renfort (42) sont reliées ensemble et forment une structure entière, et la première partie de renfort (41) et la seconde partie de renfort (42) protègent de la première face d'extrémité de montage et de la seconde face d'extrémité de montage.

7. Soupape, comprenant un ensemble de boîtier, dans laquelle l'ensemble de boîtier est l'ensemble de boîtier selon l'une quelconque des revendications 1 à 6.
